(19) Europäisches Patentamt
European Patent Office
Office européen des brevets

(11) **EP 1 110 358 B1**

(12) **FASCICULE DE BREVET EUROPEEN**

(45) Date de publication et mention de la délivrance du brevet:
**02.01.2003 Bulletin 2003/01**

(21) Numéro de dépôt: **99940275.3**

(22) Date de dépôt: **02.09.1999**

(51) Int Cl.$^7$: **H04L 25/03**

(86) Numéro de dépôt international:
**PCT/FR99/02089**

(87) Numéro de publication internationale:
**WO 00/014936 (16.03.2000 Gazette 2000/11)**

(54) **PROCEDE D'EGALISATION NUMERIQUE, ET RECEPTEUR DE RADIOCOMMUNICATION METTANT EN OEUVRE UN TEL PROCEDE**

DIGITALES ENTZERRUNGSVERFAHREN UND FUNKKOMMUNIKATIONSEMPFÄNGER ZUR DURCHFÜHRUNG DES VERFAHRENS

DIGITAL EQUALISING METHOD, AND RADIO COMMUNICATION RECEIVER IMPLEMENTING SAID METHOD

(84) Etats contractants désignés:
**DE ES FI GB SE**

(30) Priorité: **04.09.1998 FR 9811095**
**07.10.1998 FR 9812552**

(43) Date de publication de la demande:
**27.06.2001 Bulletin 2001/26**

(73) Titulaire: **NORTEL NETWORKS SA**
**78280 Guyancourt (FR)**

(72) Inventeurs:
- **DORNSTETTER, Jean-Louis**
  **F-78370 Plaisir (FR)**
- **BEN RACHED, Nidham**
  **F-75017 Paris (FR)**
- **BONHOMME, Corinne**
  **F-77700 Chessy (FR)**

(74) Mandataire: **Loisel, Bertrand**
**Cabinet Plasseraud,**
**84, rue d'Amsterdam**
**75440 Paris Cédex 09 (FR)**

(56) Documents cités:
**US-A- 4 484 338** **US-A- 4 701 936**

- **BATEMAN S C ET AL: "COMPARISON OF ALGORITHMS FOR USE IN ADAPTIVE ADJUSTMENT OF DIGITAL DATA RECEIVERS" IEE PROCEEDINGS I. SOLID- STATE & ELECTRON DEVICES, vol. 137, no. 2, PART 01, 1 avril 1990 (1990-04-01), pages 85-96, XP000113259**

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).



Printed by Jouve, 75001 PARIS (FR)

## Description

La présente invention concerne l'égalisation numérique des signaux. Elle trouve une application importante dans le domaine des radiocommunications.

Le procédé s'applique lorsqu'on reçoit un signal issu d'un émetteur par l'intermédiaire d'un canal de transmission entre émetteur et récepteur, dont la réponse est connue ou a été préalablement estimée. Un problème principal qui se pose alors est celui du compromis entre les performances de l'égaliseur et sa complexité.

Une estimation complète, selon le maximum de vraisemblance, de tous les symboles discrets composant le signal émis est possible, par exemple en employant l'algorithme de Viterbi (voir G.D. Forney Jr. : « The Viterbi Algorithm », Proc. of the IEEE, Vol. 61, No. 3, mars 1973, pages 268-278). Néanmoins, dès que la réponse impulsionnelle des canaux devient longue ou que le nombre de valeurs discrètes possibles des symboles devient important, la complexité exponentielle de ces méthodes les rend impraticables.

On considère le cas d'un canal de radiocommunication servant à la transmission d'un signal composé de séquences ou trames successives de n symboles $d_k$ ($1 \le k \le n$). Les symboles $d_k$ sont à valeurs discrètes : binaires ($\pm 1$) dans le cas d'une modulation de type BPSK (binary phase shift keying), quaternaires ($\pm 1 \pm j$) dans le cas d'une modulation de type QPSK (quaternary phase shift keying)...

Après conversion en bande de base, numérisation et filtrage adapté, un vecteur Y du signal reçu reflétant les symboles émis sur la durée d'une trame a pour expression :

$$Y = \begin{pmatrix} y_1 \\ y_2 \\ \vdots \\ y_k \\ \vdots \\ y_L \end{pmatrix} = \begin{pmatrix} r_0 & 0 & 0 & \cdots & 0 \\ r_1 & r_0 & 0 & \ddots & \vdots \\ & r_1 & r_0 & \ddots & 0 \\ \vdots & & r_1 & \ddots & 0 \\ & \vdots & & \ddots & r_0 \\ r_W & & \vdots & & r_1 \\ 0 & r_W & & & \\ 0 & 0 & r_W & & \vdots \\ \vdots & & \ddots & \ddots & \\ 0 & \cdots & 0 & 0 & r_W \end{pmatrix} \begin{pmatrix} d_1 \\ d_2 \\ \vdots \\ d_k \\ \vdots \\ d_n \end{pmatrix} + \begin{pmatrix} y_{N,1} \\ y_{N,2} \\ \vdots \\ y_{N,k} \\ \vdots \\ y_{N,L} \end{pmatrix} = A.D + Y_N \qquad (1)$$

où W+1 est la longueur, en nombre de bits, de la réponse impulsionnelle estimée du canal, $\underline{r} = (r_0, r_1, \ldots, r_W)$ est la réponse impulsionnelle estimée du canal, les $r_q$ étant des nombres complexes tels que $r_q=0$ si $q<0$ ou $q>W$, $y_k$ est le k-ième échantillon complexe reçu avec $1 \le k \le L = n+W$, et $Y_N$ est un vecteur de taille L composé d'échantillons de bruit additif $y_{N,k}$. La réponse impulsionnelle estimée $\underline{r}$ tient compte du canal de propagation, de la mise en forme du signal par l'émetteur et du filtrage de réception.

La matrice A de taille $L \times n$ a une structure de type Toeplitz le long de sa diagonale principale, c'est-à-dire que si $\alpha_{i,j}$ désigne le terme situé à la i-ième ligne et à la j-ième colonne de la matrice A, alors $\alpha_{i+1,j+1} = \alpha_{i,j}$ pour $1 \le i \le L-1$ et $1 \le j \le n-1$. Les termes de la matrice A sont donnés par : $\alpha_{1,j}=0$ pour $1<j \le n$ (A n'a donc que des zéros au-dessus de sa diagonale principale) ; $\alpha_{i,1}=0$ pour $W+1<i \le L$ (structure de matrice-bande) ; et $\alpha_{i,1}=r_{i-1}$ pour $1 \le i \le W+1$.

La relation matricielle (1) exprime que le signal reçu Y est l'observation, affectée d'un bruit additif, du produit de convolution entre la réponse impulsionnelle du canal et les symboles émis. Ce produit de convolution peut encore s'exprimer par sa transformée en Z :

$$Y(Z) = R(Z)\,.D(Z) + Y_N(Z) \qquad (2)$$

où D(Z), Y(Z), R(Z) et $Y_N(Z)$ sont les transformées en Z respectives des symboles émis, du signal reçu, de la réponse impulsionnelle du canal et du bruit :

$$D(Z) = \sum_{k=1}^{n} d_k . Z^{-k} \qquad (3)$$

$$Y(Z) = \sum_{k=1}^{L} y_k . Z^{-k} \qquad (4)$$

$$R(Z) = \sum_{q=0}^{W} r_q . Z^{-q} \qquad (5)$$

Une solution classique pour résoudre un système tel que (1) est la méthode dite de forçage à zéro (« zero forcing »), suivant laquelle on détermine le vecteur $\hat{D}_{ZF}$ à n composantes continues qui minimise l'erreur quadratique $\varepsilon = \|AD-Y\|^2$. Une discrétisation des composantes du vecteur $\hat{D}_{ZF}$ relative à chaque canal intervient ensuite, souvent par le biais d'un décodeur de canal. La solution $\hat{D}_{ZF}$ au sens des moindres carrés est donnée par : $\hat{D}_{ZF}=(A^HA)^{-1}A^HY$, où $A^H$ désigne la matrice transposée conjuguée de A. On est alors ramené au problème de l'inversion de la matrice hermitienne définie positive $A^HA$. Cette inversion peut être réalisée par divers algorithmes classiques, d'une manière directe (méthodes de Gauss, de Cholesky...) ou par des techniques itératives (algorithmes de Gauss-Seidel, du gradient...).

L'erreur d'estimation $D-\hat{D}_{ZF}$ est égale à $(A^HA)^{-1}A^HY_N$, ce qui montre que la solution obtenue est affectée d'un bruit de variance :

$$\sigma^2 = E\left(\left\|D-\hat{D}_{ZF}\right\|^2\right) = N_0 \times \mathrm{Trace}\left[\left(A^HA\right)^{-1}\right] \qquad (6)$$

où $N_0$ est la densité spectrale de puissance du bruit. On voit qu'il se produit une amplification du bruit (« noise enhancement ») quand la matrice $A^HA$ est mal conditionnée, c'est-à-dire quand elle a une ou plusieurs valeurs propres proches de 0.

Cette amplification du bruit est le principal inconvénient des méthodes de résolution classiques. Dans la pratique, les cas de mauvais conditionnement de la matrice $A^HA$ sont fréquents, particulièrement en présence de trajets multiples de propagation.

On connaît un moyen relativement simple de remédier en partie à cet inconvénient, en acceptant dans la solution un résidu d'interférence, c'est-à-dire en adoptant non pas la solution optimale au sens des moindres carrés, mais la solution: $\hat{D}_{MMSE}=(A^HA+N_0)^{-1}A^HY$, où $N_0$ désigne une estimation de la densité spectrale du bruit, que le récepteur doit alors calculer. Cette méthode est connue sous le nom de MMSE (minimum mean square error) . Elle permet de diminuer la variante d'estimation par rapport à la méthode de « zero forcing », mais en introduisant un biais.

Les méthodes de « zero forcing » et analogues reviennent à opérer un filtrage inverse du signal reçu par un filtre, modélisant la fonction de transfert 1/R(Z), calculé par une certaine approximation (quadratique dans le cas du « zéro forcing »). Lorsqu'une ou plusieurs racines du polynôme R(Z) (équation (5)) sont situées sur le cercle unité, le filtre inverse théorique présente des singularités telles qu'il ne peut pas être estimé par une approximation satisfaisante. Dans le cas de l'approximation quadratique, ceci correspond à la divergence de la variance de l'erreur $\sigma^2$ lorsque la matrice $A^HA$ a une valeur propre nulle (relation (6)).

Ce problème n'est pas rencontré dans les méthodes telles que l'algorithme de Viterbi qui prennent intrinsèquement en compte la nature discrète des symboles, mais qui requièrent une puissance de calcul très supérieure pour les systèmes de taille importante.

Le brevet US 4 701 936 décrit un égaliseur de canal utilisant un filtre passe-tout déterminé en référence à la transformée en Z de la réponse impulsionnelle estimée du canal.

La présente invention a pour but de proposer un procédé d'égalisation procurant un bon compromis entre la fiabilité des estimations et la complexité de l'égaliseur.

Un autre but est d'obtenir un égaliseur nécessitant une puissance de calcul raisonnable et capable de traiter, avec des performances comparables à celles d'un égaliseur de Viterbi, des signaux dont les symboles ont un nombre d'états relativement élevés et/ou des signaux reçus suivant un canal de réponse impulsionnelle relativement étalée.

L'invention propose ainsi un procédé d'égalisation numérique, pour estimer des symboles d'information discrets à partir d'échantillons numériques d'un signal reçu par l'intermédiaire d'un canal de transmission représenté par une réponse impulsionnelle finie de W+1 coefficients, W étant un entier plus grand que 1. Ce procédé comprend les étapes suivantes :

- déterminer les W racines dans le plan complexe de la transformée en Z de la réponse impulsionnelle du canal ;
- répartir les W racines en un premier ensemble de W-p racines et un second ensemble de p racines, p étant un entier plus grand que 0 et plus petit que W, les racines du second ensemble étant plus proches du cercle unité que celles du premier ensemble selon un critère de distance déterminé dans le plan complexe ;
- obtenir un signal intermédiaire en appliquant au signal reçu une première méthode d'égalisation sur la base d'une réponse impulsionnelle finie dont la transformée en Z, formée par un polynôme en $Z^{-1}$ de degré W-p, a pour racines les W-p racines du premier ensemble ; et
- obtenir des estimations des symboles d'information discrets en appliquant au signal intermédiaire une seconde méthode d'égalisation sur la base d'une réponse impulsionnelle finie dont la transformée en Z, formée par un polynôme en $Z^{-1}$ de degré p, a pour racines les p racines du second ensemble.

La « première méthode d'égalisation » sera généralement choisie de façon à traiter les symboles inconnus comme des variables continues. Elle conduit alors à une opération semblable à un filtrage inverse dont la fonction de transfert serait d'une forme approchant l'expression $1/R^S(Z)$, où $R^S(Z)$ désigne le polynôme en $Z^{-1}$ de degré W-p ayant pour racines les W-p racines les plus éloignées du cercle unité. Elle peut notamment être du type « zero forcing ». Cette opération ne génère qu'une amplification du bruit réduite, puisque les racines de la fonction de transfert en Z associée sont relativement éloignées du cercle unité.

Pour les p racines les plus proches du cercle unité, on adopte des mesures permettant de s'affranchir ou de limiter l'incidence du problème de l'amplification du bruit. On peut choisir une méthode MMSE ou analogue comme « seconde méthode d'égalisation ». Toutefois, cette seconde méthode tiendra avantageusement compte de la nature discrète des symboles inconnus. Elle pourra notamment reposer sur un algorithme à treillis, tel que l'algorithme de Viterbi, dont la mise en oeuvre est courante dans les égaliseurs de canal quand la taille du système n'est pas trop grande.

La seconde méthode d'égalisation est généralement d'une mise en oeuvre plus complexe que la première. Dans chaque cas particulier, le choix du nombre p permet de rechercher le meilleur compromis entre la fiabilité des estimations, qui fait préférer les valeurs élevées de p, et la complexité de l'égaliseur, qui fait préférer les valeurs faibles de p.

Un autre aspect de la présente invention se rapporte à un récepteur de radiocommunication, comprenant :

- des moyens de conversion pour produire des échantillons numériques à partir d'un signal radio reçu par l'intermédiaire d'un canal de transmission représenté par une réponse impulsionnelle finie de W+1 coefficients, W étant un entier plus grand que 1 ;
- des moyens de mesure de la réponse impulsionnelle du canal ;
- des moyens de calcul des W racines dans le plan complexe de la transformée en Z de la réponse impulsionnelle mesurée ;
- des moyens de répartition des W racines en un premier ensemble de W-p racines et un second ensemble de p racines, p étant un entier plus grand que 0 et plus petit que W, les racines du second ensemble étant plus proches du cercle unité que celles du premier ensemble selon un critère de distance déterminé dans le plan complexe ;
- un premier étage d'égalisation pour obtenir un signal intermédiaire en appliquant au signal reçu une première méthode d'égalisation sur la base d'une réponse impulsionnelle finie dont la transformée en Z, formée par un polynôme en $Z^{-1}$ de degré W-p, a pour racines les W-p racines du premier ensemble ; et
- un second étage d'égalisation pour obtenir des estimations de symboles discrets d'un signal transmis sur le canal en appliquant au signal intermédiaire une seconde méthode d'égalisation sur la base d'une réponse impulsionnelle finie dont la transformée en Z, formée par un polynôme en $Z^{-1}$ de degré p, a pour racines les p racines du second ensemble.

D'autres particularités et avantages de la présente invention apparaîtront dans la description ci-après d'exemples de réalisation non limitatifs, en référence aux dessins annexés, dans lesquels :

- la figure 1 est un schéma synoptique d'un exemple de récepteur de radiocommunication selon l'invention ;

- la figure 2 est un organigramme montrant un mode de réalisation du procédé selon l'invention ; et
- la figure 3 est un diagramme illustrant les performances du procédé.

Le récepteur représenté sur la figure 1 comporte un étage radio 1 qui reçoit le signal radio capté par l'antenne 2 et le convertit en bande de base. Le signal en bande de base est numérisé par un convertisseur analogique-numérique 3, puis fourni à un filtre de réception 4. Le filtre 4 assure un filtrage adapté à la mise en forme des signaux par l'émetteur. Il délivre un signal numérique à raison d'un échantillon complexe par symbole émis.

Ce signal numérique est fourni à un démodulateur comprenant d'une part un module 6 de synchronisation et d'estimation de canal, et d'autre part un égaliseur 7.

La synchronisation et l'estimation de canal sont par exemple effectuées de manière classique à l'aide d'une séquence de synchronisation incluse par l'émetteur dans chaque trame de signal. La détection de cette séquence, connue du récepteur, permet d'une part de synchroniser le récepteur par rapport à la structure temporelle des trames émises, et d'autre part d'estimer la réponse impulsionnelle $\underline{r} = (r_0, r_1, ..., r_W)$ du canal sur lequel les trames sont transmises. La réponse impulsionnelle calculée par le module 6 est fournie à l'égaliseur 7.

L'égaliseur 7 fonctionne par exemple conformément à l'organigramme représenté sur la figure 2 pour traiter chaque trame synchronisée du signal reçu, se présentant sous la forme d'un vecteur

$$Y = \begin{pmatrix} Y_1 \\ \vdots \\ Y_L \end{pmatrix},$$

avec L=n+W en reprenant les notations précédentes.

Le module d'estimation de canal 6 ayant fourni les W+1 coefficients complexes $r_q$ de la réponse impulsionnelle estimée du canal, la première étape 10 consiste à rechercher les W racines de la transformée en Z de cette réponse impulsionnelle, donnée par l'équation (5). Diverses méthodes classiques de recherche de racines complexes d'un polynôme peuvent être utilisées à l'étape 10. On pourra à cet égard se reporter à l'ouvrage de E. DURAND : « Solutions Numériques des Equations Algébriques ; Tome I : Equations du Type F(x)=0 », Editions Masson, 1960.

Les W racines complexes ainsi trouvées $\alpha_1, \alpha_2, ..., \alpha_W$ sont ensuite ordonnées de façon à pouvoir les répartir en deux ensembles, l'un contenant les W-p racines les plus éloignées du cercle unité, et l'autre les p racines les plus proches du cercle unité.

Pour cela, une distance $\delta_q$ est calculée à l'étape 11 pour chacune des racines $\alpha_q$ ($1 \le q \le W$). Cette distance est avantageusement obtenue de la manière suivante :

$$\delta_q = \begin{cases} 1 - |\alpha_q| & \text{si } |\alpha_q| \le 1 \\ 1 - 1/|\alpha_q| & \text{si } |\alpha_q| > 1 \end{cases} \qquad (7)$$

A l'étape 12, les racines $\alpha_q$ de la fonction de transfert R(Z) sont triées dans l'ordre des distances décroissantes : $\delta_1 \ge \delta_2 \ge ... \ge \delta_W$. On sépare alors les W-p premières racines $\alpha_1, ..., \alpha_{W-P}$, qui sont les plus éloignées du cercle unité, des p racines restantes $\alpha_{W-P+1}, ..., \alpha_W$.

A l'étape 13, l'égaliseur 7 développe un polynôme en $Z^{-1}$ défini par :

$$R^S(Z) = \prod_{q=1}^{W-p} \left(1 - \alpha_q . Z^{-1}\right) = \sum_{q=0}^{W-p} s_q . Z^{-q} \qquad (8)$$

Ceci permet de déterminer les coefficients $s_q$ de la fonction de transfert $R^S(Z)$ associée à la réponse impulsionnelle $\underline{s} = (s_0, s_1, ..., s_{W-p})$ d'un canal virtuel, qui correspondrait au canal de transmission estimé avec élimination des contributions les plus proches des zones de singularité.

On peut alors procéder à une première égalisation 14 revenant à effectuer un filtrage inverse approchant la fonction de transfert $1/R^S(Z)$. Plusieurs implémentations peuvent être retenues pour effectuer ce filtrage inverse. On peut notamment effectuer une égalisation par « zero forcing » comme indiqué précédemment. Au sujet de ces méthodes, on pourra se reporter à l'ouvrage de J.G. Proakis : « Digital Communications » McGraw-Hill, 2e édition, 1989.

Le filtrage inverse 14 produit un signal intermédiaire sous la forme d'un vecteur Y' de L'=n+p échantillons $y'_1,\ldots,y'_{L'}$. Dans le cas d'une méthode de « zero forcing », le vecteur Y' est obtenu par la relation matricielle :

$$Y' = (A'^H A')^{-1} A'^H Y \qquad (9)$$

Dans l'expression (9), A' désigne une matrice de n+W lignes et n+p colonnes ayant une structure de Toeplitz, formée à partir des coefficients $s_q$ du polynôme $R^S(Z)$ :

$$A' = \begin{pmatrix} s_0 & 0 & 0 & \cdots & 0 \\ s_1 & s_0 & 0 & & \vdots \\ & s_1 & s_0 & \ddots & 0 \\ \vdots & & s_1 & \ddots & 0 \\ & \vdots & & \ddots & s_0 \\ s_{W-p} & & \vdots & & s_1 \\ 0 & s_{W-p} & & & \\ 0 & 0 & s_{W-p} & & \vdots \\ \vdots & & \ddots & \ddots & \\ 0 & \cdots & 0 & 0 & s_{W-p} \end{pmatrix} \qquad (10)$$

Grâce au tri des racines $\alpha_q$, les valeurs propres de la matrice $A'^H A'$ sont relativement éloignées de 0.

En variante, on pourrait réaliser le filtrage inverse en mettant en cascade W-p cellules de filtrage correspondant chacune à l'inverse d'une fonction de transfert $R^s_q(Z) = 1 - \alpha_q Z^{-1}$, pour $1 \le q \le W-p$. Si $|\alpha_q| = 1$, le filtre inverse de $R^s_q(Z)$ est irréalisable. Si $|\alpha_q| < 1$, on peut développer $1/R^s_q(Z)$ sous la forme :

$$\frac{1}{R^s_q(Z)} = 1 + \alpha_q.Z^{-1} + \alpha_q^2.Z^{-2} + \ldots + \alpha_q^m.Z^{-m} + \ldots \qquad (11)$$

Le développement (11) est causal, et stable puisque le domaine de convergence contient le cercle unité. La cellule de filtrage inverse peut donc être réalisée sous forme transverse ou sous forme récursive.

Si $|\alpha_q| > 1$, on peut développer $1/R^s_q(Z)$ sous la forme :

$$\frac{1}{R^S_q(Z)} = -\alpha_q^{-1}.Z.\left(1 + \alpha_q^{-1}.Z + \alpha_q^{-2}.Z^2 + \ldots + \alpha_q^{-m}.Z^m + \ldots\right) \qquad (12)$$

Ce développement (12) est anti-causal et stable. Pour la réalisation de la cellule de filtrage inverse, on tronque le développement (12) et on adopte une implémentation sous forme transverse. L'anti-causalité provoque un retard correspondant à la longueur de la réponse retenue.

On note que les développements (11) et (12) justifient le critère de distance au cercle unité $\delta_q$ utilisé conformément à la relation (7).

A l'étape 15, l'égaliseur 7 développe un polynôme de degré p en $Z^{-1}$, dont les racines correspondent aux p racines de R(Z) les plus proches du cercle unité, tel que $R(Z) = R^S(Z).R^I(Z)$ :

$$R^I(Z) = r_0.\prod_{q=W-p+1}^{W}\left(1 - \alpha_q.Z^{-1}\right) = \sum_{q=0}^{p} t_q.Z^{-q} \qquad (13)$$

Les coefficients complexes $t_q$ définissent la réponse impulsionnelle d'un autre canal de transmission virtuel, dont l'égalisation par une méthode de type « zero forcing » ou analogue poserait des problèmes d'amplification du bruit.

Le signal intermédiaire Y' est alors soumis à une égalisation selon une autre méthode, sur la base de la réponse impulsionnelle $\underline{t} = (t_0,t_1,...,t_p)$. Cette seconde égalisation 16 est avantageusement effectuée à l'aide d'un treillis de Viterbi (voir l'article précité de G.D. Forney Jr., ou l'ouvrage précité de J.G. Proakis).

Le second étage d'égalisation 16 produit les estimations $d_k$ des symboles de la trame ($1 \leq k \leq n$). Ces estimations $d_k$ formant la sortie de l'égaliseur 7 peuvent être fournies à un module de désentrelacement 8 puis à un décodeur de canal 9 qui détecte et/ou corrige d'éventuelles erreurs de transmission.

La figure 3 illustre les performances du procédé dans le cas de la transmission d'une trame de signal selon le format du système radiotéléphonique cellulaire européen GSM, en remplaçant la modulation binaire de type GMSK par une modulation de phase à huit états (modulation 8-PSK). La réponse impulsionnelle du canal était tronquée à cinq temps bits (W=4). La figure 3 montre la dépendance entre le taux d'erreur binaire BER, exprimé en %, et le rapport Eb/N0 entre l'énergie par bit et la densité spectrale du bruit, exprimé en décibels. Le BER est celui observé dans les estimations des symboles après le désentrelacement et le décodage de canal effectués conformément aux méthodes employées dans le GSM. La courbe I montre les résultats procurés par la méthode de « zero forcing » pur, c'est-à-dire dans le cas limite où p=0. La courbe II montre le résultat théorique qui serait obtenu en égalisant le canal purement avec l'algorithme de Viterbi (cas limite où p=W). Dans la pratique, le treillis correspondant devrait comporter $8^4$=4096 états, de sorte que l'égaliseur de Viterbi serait irréalisable avec les techniques actuelles. L'écart entre les courbes I et II illustre la supériorité de l'algorithme de Viterbi qui délivre les estimations selon le maximum de vraisemblance.

Les courbes III et IV montrent les résultats obtenus par le procédé selon l'invention, respectivement dans les cas où p=1 et p=2. On voit l'amélioration très sensible des résultats déjà obtenue pour la valeur p=1 par rapport au « zéro forcing » pur.

A titre indicatif, l'égalisation d'une trame de signal GSM par l'algorithme de Viterbi pur dans les conditions de la figure 3 requerrait de l'ordre de 8,45 millions d'opérations en virgule flottante, soit environ 1,83 Gflops, alors que la mise en oeuvre de la présente invention dans les mêmes conditions requiert de l'ordre de 19000 opérations en virgule flottante (≈4,2 Mflops) dans le cas où p=1, y compris la recherche des racines de R(Z) et le filtrage inverse $1/R^S(Z)$ par la méthode « zéro forcing ». Ce nombre est de l'ordre de 129000 opérations (≈28 Mflops) dans le cas où p=2, ce qui reste compatible avec la puissance des processeurs de traitement de signal (DSP) actuellement disponibles.

## Revendications

1. Procédé d'égalisation numérique, pour estimer des symboles d'information discrets ($d_k$) à partir d'échantillons numériques ($y_k$) d'un signal reçu par l'intermédiaire d'un canal de transmission représenté par une réponse impulsionnelle finie de W+1 coefficients ($r_0,r_1,...,r_W$), W étant un entier plus grand que 1, dans lequel on détermine les W racines ($\alpha_1,\alpha_2,...,\alpha_W$) dans le plan complexe de la transformée en Z (R(Z)) de la réponse impulsionnelle du canal, **caractérisé en ce qu'**il comprend les étapes suivantes :

   - répartir les W racines en un premier ensemble de W-p racines ($\alpha_1,...,\alpha_{W-p}$) et un second ensemble de p racines ($\alpha_{W-p+1},...,\alpha_W$), p étant un entier plus grand que 0 et plus petit que W, les racines du second ensemble étant plus proches du cercle unité que celles du premier ensemble selon un critère de distance déterminé dans le plan complexe ;
   - obtenir un signal intermédiaire (Y') en appliquant au signal reçu (Y) une première méthode d'égalisation sur la base d'une réponse impulsionnelle finie dont la transformée en Z ($R^S(Z)$), formée par un polynôme en $Z^{-1}$ de degré W-p, a pour racines les W-p racines du premier ensemble ; et
   - obtenir des estimations ($d_k$) des symboles d'information discrets en appliquant au signal intermédiaire une seconde méthode d'égalisation sur la base d'une réponse impulsionnelle finie dont la transformée en Z ($R^I(Z)$), formée par un polynôme en $Z^{-1}$ de degré p, a pour racines les p racines du second ensemble.

2. Procédé selon la revendication 1, dans lequel la première méthode d'égalisation produit le signal intermédiaire sous la forme d'un vecteur Y' de n+p échantillons ($y'_1,...,y'_{n+p}$) obtenu selon la relation :

$$Y' = (A'^H A')^{-1} A'^H Y$$

   où n est un entier représentant une taille de trame, Y est un vecteur formé de n+W échantillons ($y_k$) du signal reçu, et A' est une matrice de n+W lignes et n+p colonnes ayant une structure de Toeplitz formée à partir des coefficients ($S_q$) dudit polynôme en $Z^{-1}$ de degré W-p ($R^S(Z)$).

3. Procédé selon la revendication 1 ou 2, dans lequel la seconde méthode d'égalisation comporte la mise en oeuvre d'un algorithme de Viterbi.

4. Procédé selon l'une quelconque des revendications 1 à 3, dans lequel le critère de distance au cercle unité, utilisé pour répartir les W racines $\alpha 1,..., \alpha_W$ de la transformée en Z (R(Z)) de la réponse impulsionnelle du canal entre les premier et second ensembles, s'exprime par une distance $\delta_q$ de la forme $\delta_q = 1 - |\alpha_q|$ si $|\alpha_q| \leq 1$, et de la forme $\delta_q = 1 - 1/|\alpha_q|$ si $|\alpha_q| > 1$, pour $1 \leq q \leq W$.

5. Récepteur de radiocommunication, comprenant :

- des moyens de conversion (1,3,4) pour produire des échantillons numériques ($y_k$) à partir d'un signal radio reçu par l'intermédiaire d'un canal de transmission représenté par une réponse impulsionnelle finie de W+1 coefficients ($r_0,r_1,...,r_W$), W étant un entier plus grand que 1 ;
- des moyens (6) de mesure de la réponse impulsionnelle du canal ;
- des moyens de calcul des W racines ($\alpha_1,\alpha_2,...,\alpha_W$) dans le plan complexe de la transformée en Z (R(Z)) de la réponse impulsionnelle mesurée ;
- des moyens de répartition des W racines en un premier ensemble de W-p racines ($\alpha_1,...,\alpha_{W-p}$) et un second ensemble de p racines ($\alpha_{W-p+1},...,\alpha_W$), p étant un entier plus grand que 0 et plus petit que W, les racines du second ensemble étant plus proches du cercle unité que celles du premier ensemble selon un critère de distance déterminé dans le plan complexe ;
- un premier étage d'égalisation pour obtenir un signal intermédiaire en appliquant au signal reçu ($y_k$) une première méthode d'égalisation sur la base d'une réponse impulsionnelle finie dont la transformée en Z ($R^S(Z)$), formée par un polynôme en $Z^{-1}$ de degré W-p, a pour racines les W-p racines du premier ensemble ; et
- un second étage d'égalisation pour obtenir des estimations ($d_k$) de symboles discrets d'un signal transmis sur le canal en appliquant au signal intermédiaire une seconde méthode d'égalisation sur la base d'une réponse impulsionnelle finie dont la transformée en Z ($R^I(Z)$), formée par un polynôme en $Z^{-1}$ de degré p, a pour racines les p racines du second ensemble.

6. Récepteur selon la revendication 5, dans lequel le premier étage d'égalisation est agencé pour produire le signal intermédiaire sous la forme d'un vecteur Y' de n+p échantillons ($y'_1,...,y'_{n+p}$) obtenu selon la relation :

$$Y' = (A'^H A')^{-1} A'^H Y$$

où n est un entier représentant une taille de trame, Y est un vecteur formé de n+W échantillons ($y_k$) du signal reçu, et A' est une matrice de n+W lignes et n+p colonnes ayant une structure de Toeplitz formée à partir des coefficients ($s_q$) dudit polynôme en $Z^{-1}$ de degré W-p ($R^S Z$)).

7. Récepteur selon la revendication 5 ou 6, dans lequel le second étage d'égalisation est agencé pour mettre en oeuvre un algorithme de Viterbi.

8. Recepteur selon l'une quelconque des revendications 5 à 7, dans lequel les moyens de répartition des racines comprennent, pour répartir les W racines entre les premier et second ensembles, des moyens de vérification d'un critère de distance au cercle unité s'exprimant par une distance $\delta_q$ de la forme $\delta_q = 1 - |\alpha_q|$ si $|\alpha_q| \leq 1$, et de la forme $\delta_q = 1 - 1/|\alpha_q|$ si $|\alpha_q| > 1$, pour $1 \leq q \leq W$.

**Claims**

1. A digital equalization method for estimating discrete symbols ($d_k$) of a transmitted signal from digital samples ($y_k$) of a signal received over a transmission channel represented by a finite impulse response of W+1 coefficients ($r_0$, $r_1,...,r_w$), W being an integer greater than 1, wherein the W roots ($\alpha_1,\alpha_2,...,\alpha_W$) in the complex plane of the Z-transform (R(Z)) of the impulse response are determined, **characterized in that** it comprises the steps of

- distributing the W roots into a first set of W-p roots ($\alpha_1,...,\alpha_{W-p}$) and a second set of p roots ($\alpha_{W-p+1},...,\alpha_W$), p being an integer greater than 0 and smaller than W, the roots of the second set being closer to the unit circle than those of the first set according to a determined distance criterion in the complex plane;
- obtaining an intermediate signal (Y') by applying a first equalization method to the received signal (Y) based

on a finite impulse response whose Z-transform ($R^S(Z)$), formed by a polynomial of degree W-p in $Z^{-1}$, has roots which are the W-p roots of the first set; and

- obtaining estimations ($d_k$) of the discrete symbols of the transmitted signal by applying a second equalization method to the intermediate signal based on a finite impulse response whose Z-transform ($R^I(Z)$), formed by a polynomial of degree p in $Z^{-1}$, has roots which are the p roots of the second set.

**2.** A method according to claim 1, wherein the first equalization method yields the intermediate signal in the form of a vector Y' of n+p samples ($y'_1,...,y'_{n+p}$) obtained according to the relation :

$$Y' = (A'^H A')^{-1} A'^H Y$$

where Y is a vector composed of n+W samples ($y_k$) of the received signal, and A' is a matrix with n+W rows and n+p columns having a Toeplitz structure formed from the coefficients ($s_q$) of said polynomial of degree W-p in $Z^{-1}$ ($R^S(Z)$).

**3.** A method according to claim 1 or 2, wherein the second equalization method comprises implementing a Viterbi algorithm.

**4.** A method according to any one of claims 1 to 3, wherein the unit circle distance criterion, used to distribute the W roots $\alpha_1,...,\alpha_W$ of the Z-transform (R(Z)) of the channel impulse response into the first and second sets, is expressed as a distance $\delta_q$ of the form $\delta_q = 1 - |\alpha_q|$ if $|\alpha_q| \le 1$, and of the form $\delta_q = 1 - 1/|\alpha_q|$ if $|\alpha_q| > 1$, for $1 \le q \le W$.

**5.** A radio communications receiver comprising :

- conversion means (1,3,4) to produce digital samples ($y_k$) from a radio signal received over a transmission channel represented by a finite impulse response of W+1 coefficients ($r_0,r_1,...,r_W$), W being an integer greater than 1;
- means (6) for measuring the channel impulse response;
- means for calculating the W roots ($\alpha_1,\alpha_2,...,\alpha_W$) in the complex plane of the Z-transform (R(Z)) of the impulse response;
- means for distributing the W roots into a first set of W-p roots ($\alpha_1,...,\alpha_{W-p}$) and a second set of p roots ($\alpha_{W-p+1},...,\alpha_W$), p being an integer greater than 0 and smaller than W, the roots of the second set being closer to the unit circle than those of the first set according to a determined distance criterion in the complex plane;
- a first equalization stage for producing an intermediate signal by applying a first equalization method to the received signal ($y_k$) based on a finite impulse response whose Z-transform ($R^S(Z)$), formed by a polynomial of degree W-p in $Z^{-1}$, has roots which are the W-p roots of the first set; and
- a second equalization stage for producing estimations ($d_k$) of the discrete symbols of a signal carried on the channel by applying a second equalization method to the intermediate signal based on a finite impulse response whose Z-transform ($R^I(Z)$), formed by a polynomial of degree p in $Z^{-1}$, has roots which are the p roots of the second set.

**6.** A receiver according to claim 5, wherein the first equalization stage is arranged to yield the intermediate signal in the form of a vector Y' of n+p samples ($y'_1,...,y'_{n+p}$) obtained according to the relation :

$$Y' = (A'^H A')^{-1} A'^H Y$$

where Y is a vector composed of n+W samples ($y_k$) of the received signal, and A' is a matrix with n+W rows and n+p columns having a Toeplitz structure formed from the coefficients ($s_q$) of said polynomial of degree W-p in $Z^{-1}$ ($R^S(Z)$).

**7.** A receiver according to claim 5 or 6, wherein the second equalization stage is arranged to implement a Viterbi algorithm.

**8.** A receiver according to any one of claims 5 to 7, wherein the means for distributing the W roots into the first and second sets make use of a unit circle distance criterion expressed as a distance $\delta_q$ of the form $\delta_q = 1 - |\alpha_q|$ if $|\alpha_q| \le 1$, and of the form $\delta_q = 1 - 1/|\alpha_q|$ if $|\alpha_q| > 1$, for $1 \le q \le W$.

## Patentansprüche

**1.** Digitales Entzerrungsverfahren zur Schätzung diskreter Datensymbole ($d_k$) auf der Grundlage numerischer Abtastungen ($y_k$) eines Signals, das auf einem Übertragungskanal empfangen wird, repräsentiert durch eine endliche Impulsantwort von W+1 Koeffizienten ($r_0, r_1, ..., r_w$), wobei W eine ganze Zahl ist, die größer als 1 ist, bei welchem W Wurzeln ($\alpha_1$, $\alpha_2$,...., $\alpha_w$) auf der komplexen Ebene der Z-Transformierten (R(Z)) der Impulsantwort des Kanals ermittelt werden, **gekennzeichnet dadurch, dass** das Verfahren folgende Schritte umfasst:

- W Wurzeln werden in eine erste Menge von W-p Wurzeln ($\alpha_1$, ...., $\alpha_{w-p}$) und eine zweite Menge von p Wurzeln ($\alpha_{w-p+1}$, ...., $\alpha_w$) aufgeteilt, wobei p eine ganze Zahl ist, die größer als 0, aber kleiner als W ist, und die Wurzeln der zweiten Menge gemäß einem Entfernungskriterium, das auf komplexer Ebene festgelegt wird, näher am Einheitskreis liegen, als die der ersten Menge;
- es wird ein Zwischensignal (Y') erzeugt, indem das empfangene Signal (Y) einem ersten Entzerrungsverfahren auf Grundlage einer endlichen Impulsantwort unterzogen wird, wobei die Wurzeln von deren Z-Transformierten ($R^S(Z)$) - gebildet durch ein $Z^{-1}$-Polynom vom Grad W-p - den W-p Wurzeln der ersten Menge entsprechen; und
- es werden Schätzungen ($d_k$) der diskreten Datensymbole erstellt, indem das Zwischensignal einem zweiten Entzerrungsverfahren auf Grundlage einer endlichen Impulsantwort unterzogen wird, wobei die Wurzeln der Z-Transformierten ($R^I(Z)$) - gebildet durch ein $Z^{-1}$-Polynom vom Grad p - den p Wurzeln der zweiten Menge entsprechen.

**2.** Verfahren gemäß Patentanspruch 1, wobei das erste Entzerrungsverfahren das Zwischensignal in Form eines Vektors Y' aus n+p Stichproben ($y'_1, ..., y'_{n+p}$) erzeugt, die nach folgender Relation ermittelt werden:

$$Y' = (A'^H A')^{-1} A'^H Y$$

wobei n eine eine Rastergröße repräsentierende ganze Zahl ist, Y ein Vektor bestehend aus n+W Stichproben ($y_k$) des empfangenen Signals ist und A' eine Matrix mit n+W Zeilen und n+p Spalten ist, die eine Töplitz-Struktur aufweist, die auf Grundlage der Koeffizienten ($s_q$) des $Z^{-1}$-Polynoms vom Grad W-p, ($R^S(Z)$), gebildet wird.

**3.** Verfahren gemäß einem der Patentansprüche 1 oder 2, wobei das zweite Entzerrungsverfahren einen Viterbi-Algorithmus verwendet.

**4.** Verfahren gemäß einem der Patentansprüche 1 bis 3, wobei das Entfernungskriterium zum Einheitskreis, das zur Aufteilung der W Wurzeln $\alpha_1, ..., \alpha_w$ der Z-Transformierten (R(Z)) der Impulsantwort des Kanals auf die erste und die zweite Menge verwendet wird, als Abstand $\delta_q$ wie folgt ausgedrückt wird:

$$\delta_q = 1 - |\alpha_q|, \text{ wenn } |\alpha_q| \leq 1, \text{ und } \delta_q = 1 - 1/|\alpha_q|, \text{ wenn } |\alpha_q| > 1, \text{ für } 1 \leq q \leq W.$$

**5.** Funkkommunikationsempfänger umfassend:

- Umwandlungsmittel (1,3,4) zur Erzeugung numerischer Abtastungen ($y_k$) auf Grundlage eines Radiosignals, das auf einem Übertragungskanal empfangen wird, repräsentiert durch eine endliche Impulsantwort von W+1 Koeffizienten ($r_0, r_1, ..., r_w$), wobei W eine ganze Zahl ist, die größer als 1 ist;
- Messmittel (6) für die Impulsantwort des Kanals;
- Einrichtungen zur Berechnung der W Wurzeln ($\alpha_1, \alpha_2 ..., \alpha_w$) auf der komplexen Ebene der Z-Transformierten (R(Z)) der gemessenen Impulsantwort des Kanals;
- Mittel zur Aufteilung der W Wurzeln in eine erste Menge von W-p Wurzeln ($\alpha_1, ..., \alpha_{w-p}$) und eine zweite Menge von p Wurzeln ($\alpha_{w-p+1}, ...., \alpha_w$), wobei p eine ganze Zahl ist, die größer als 0, aber kleiner als W ist, und die Wurzeln der zweiten Menge gemäß einem Entfernungskriterium, das auf komplexer Ebene festgelegt wird, näher am Einheitskreis liegen, als die der ersten Menge;
- einer ersten Entzerrungsstufe zur Erzeugung eines Zwischensignals, indem das empfangene Signal ($y_k$) einem ersten Entzerrungsverfahren auf Grundlage einer endlichen Impulsantwort unterzogen wird, wobei die Wurzeln von deren Z-Transformierten ($R^S(Z)$) - gebildet durch ein $Z^{-1}$-Polynom vom Grad W-p - den W-p Wurzeln der ersten Menge entsprechen; und
- einer zweiten Entzerrungsstufe zur Erzeugung von Schätzungen ($\hat{d}_k$) der diskreten Symbole eines über den

Kanal übermittelten Signals, indem das Zwischensignal einem zweiten Entzerrungsverfahren auf Grundlage einer endlichen Impulsantwort unterzogen wird, wobei die Wurzeln von deren Z-Transformierten ($R^I(Z)$) - gebildet durch ein $Z^{-1}$-Polynom vom Grad p - den p Wurzeln der zweiten Menge entsprechen.

**6.** Funkkommunikationsempfänger gemäß Patentanspruch 5, wobei die erste Entzerrungsstufe das Zwischensignal in Form eines Vektors Y' aus n+p Stichproben ($y'_1,\ldots,y'_{n+p}$) erzeugt, die nach folgender Relation ermittelt werden:

$$Y' = (A'^H A')^{-1} A'^H Y$$

wobei n eine eine Rastergröße repräsentierende ganze Zahl ist, Y ein Vektor bestehend aus n+W Stichproben ($y_k$) des empfangenen Signals ist und A' eine Matrix mit n+W Zeilen und n+p Spalten ist, die eine Töplitz-Struktur aufweist, die auf Grundlage der Koeffizienten ($s_q$) des $Z^{-1}$-Polynoms vom Grad W-p, ($R^S(Z)$), gebildet wird.

**7.** Funkkommunikationsempfänger gemäß einem der Patentansprüche 5 oder 6, wobei die zweite Entzerrungsstufe auf einen Viterbi-Algorithmus ausgelegt ist.

**8.** Funkkommunikationsempfänger gemäß einem der Patentansprüche 5 bis 7, wobei die Mittel zur Aufteilung der W Wurzeln in eine erste und eine zweite Menge Mittel zur Prüfung eines Entfernungskriteriums zum Einheitskreis umfassen, das als Abstand $\delta_q$ wie folgt ausgedrückt wird:

$$\delta_q = 1 - |\alpha_q|\text{, wenn } |\alpha_q| \leq 1\text{, und } \delta_q = 1 - 1/|\alpha_q|\text{, wenn } |\alpha_q| > 1\text{, für } 1 \leq q \leq W.$$

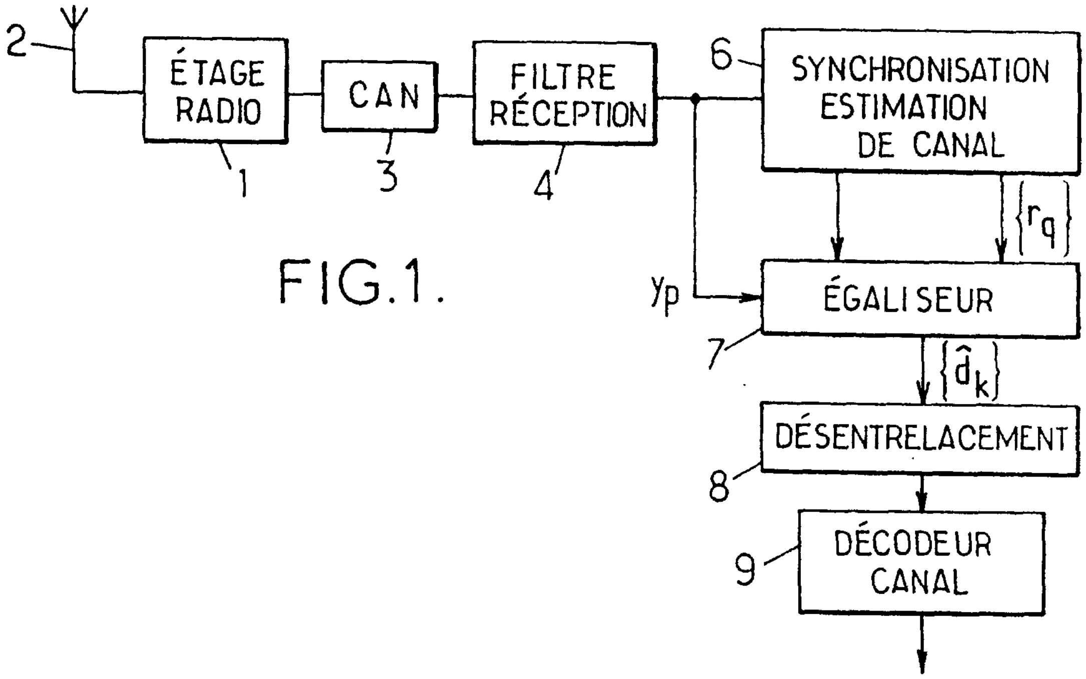
2
ÉTAGE RADIO
1
CAN
3
FILTRE RÉCEPTION
4
6
SYNCHRONISATION ESTIMATION DE CANAL
{$r_q$}
$y_p$
ÉGALISEUR
7
{$\hat{d}_k$}
DÉSENTRELACEMENT
8
9
DÉCODEUR CANAL

FIG.1.

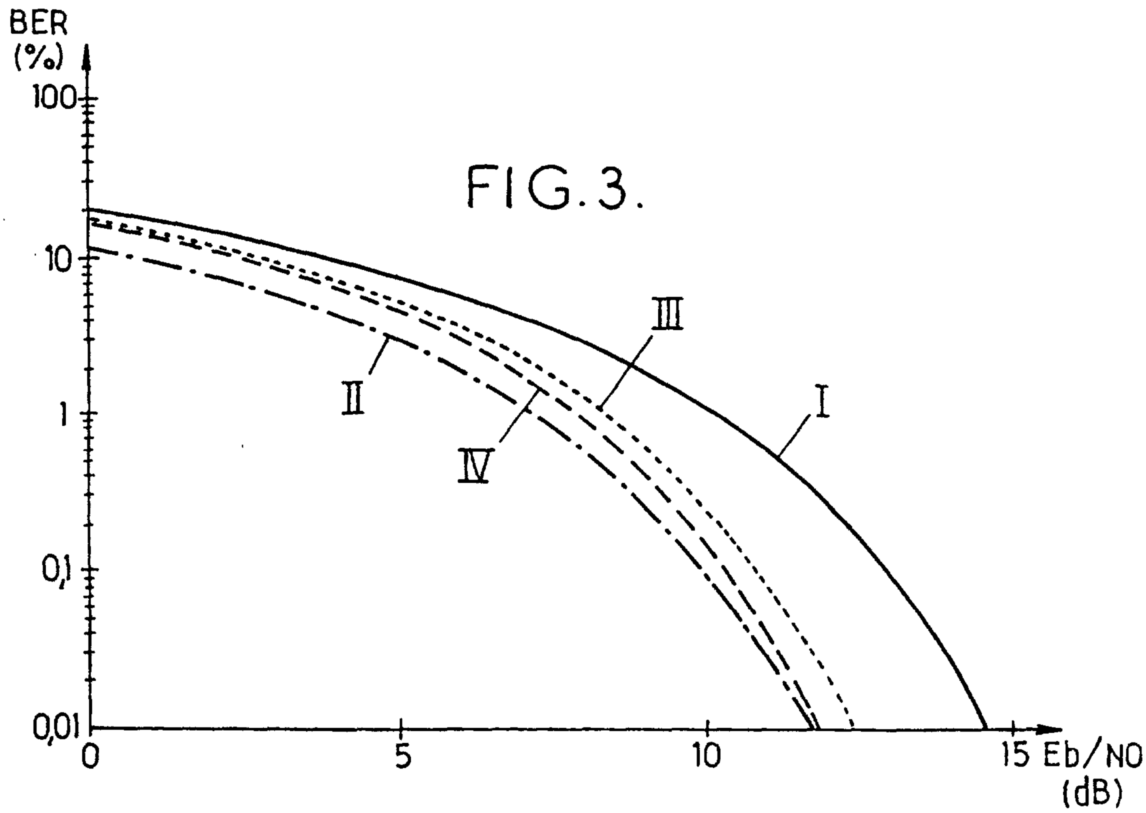
BER (%)
100
10
1
0,1
0,01
0
5
10
15
Eb/NO (dB)
I
II
III
IV

FIG.3.

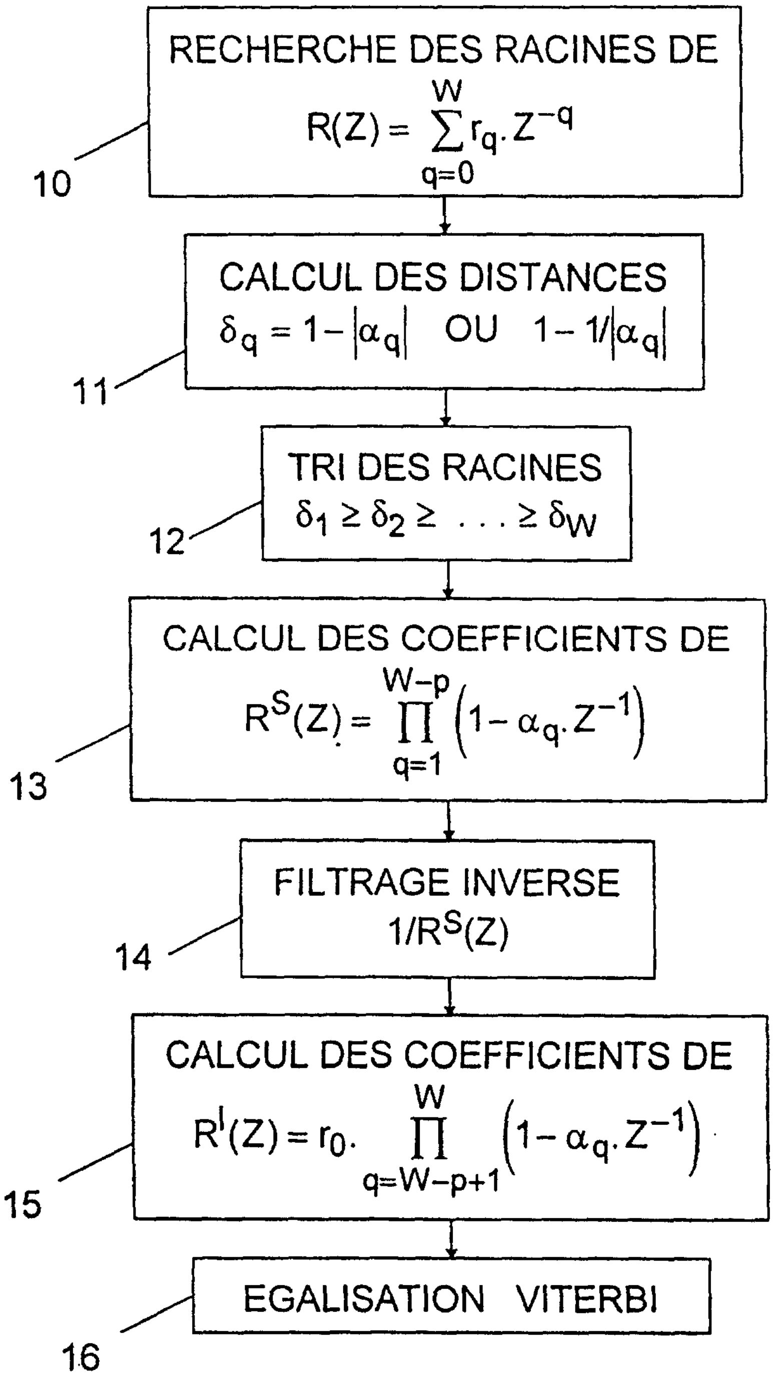
RECHERCHE DES RACINES DE
$R(Z) = \sum_{q=0}^{W} r_q . Z^{-q}$
10
CALCUL DES DISTANCES
$\delta_q = 1 - |\alpha_q|$ OU $1 - 1/|\alpha_q|$
11
TRI DES RACINES
$\delta_1 \geq \delta_2 \geq \ldots \geq \delta_W$
12
CALCUL DES COEFFICIENTS DE
$R^S(Z) = \prod_{q=1}^{W-p} \left(1 - \alpha_q . Z^{-1}\right)$
13
FILTRAGE INVERSE
$1/R^S(Z)$
14
CALCUL DES COEFFICIENTS DE
$R^I(Z) = r_0 . \prod_{q=W-p+1}^{W} \left(1 - \alpha_q . Z^{-1}\right)$
15
EGALISATION VITERBI
16

FIG.2.